# EUROPÄISCHE PATENTSCHRIFT

(11) **EP 0 947 529 B1**
(45) Veröffentlichungstag und Bekanntmachung des Hinweises auf die Patenterteilung: **18.08.2004**
(21) Anmeldenummer: 99106472.6
(22) Anmeldetag: 30.03.1999
(51) Int. Cl.: C08G 18/10, C08G 18/32, C09J 175/04

(54) **Latente Aminogruppen und Isocyanatgruppen aufweisende Polyurethan-Prepolymere, Verfahren zu deren Herstellung sowie deren Verwendung**
Polyurethane prepolymers containing latent amino groups and isocyanate groups, their method of preparation as well as their use
Prépolymères de polyuréthane contenant des groupes à fonction amino latente et des groupes isocyanates, leur procédé de préparation ainsi que leur utilisation

(30) Priorität: 02.04.1998 CH 79998
(43) Veröffentlichungstag der Anmeldung: 06.10.1999
(73) Patentinhaber: Sika Schweiz AG, 8064 Zürich (CH)
(72) Erfinder: Pfenninger, Ueli, 8804 Au (CH); Bütikofer, Pierre-André, Dr., 8304 Wallisellen (CH)
(74) Vertreter: Isler, Jörg

(56) Entgegenhaltungen:
- EP-A- 0 469 751
- US-A- 4 404 379
- US-A- 4 853 454

## Beschreibung

Die vorliegende Erfindung betrifft Polyurethanmassen, insbesondere eine feuchtigkeitshärtende einkomponentige Polyurethanmasse, welche ein Prepolymer enthält, welches neben Isocyanatgruppen auch ans Prepolymer gebundene latente Aminogruppen enthält. Die Polyurethanmasse kann unter anderem verwendet werden als Dichtmasse für Fugen aller Art, als Klebstoff für elastische Verklebungen oder als elastische Beschichtung für flächige Abdichtungen.

Einkomponentige Polyurethane mit latenten Aminen sind seit längerem bekannt und hinreichend beschrieben. Sie weisen gegenüber herkömmlichen einkomponentigen Polyurethanen, welche durch die Reaktion mit Luftfeuchtigkeit aushärten, den Vorteil auf, dass bei der Aushärtung über latente Amine kein CO₂ gebildet wird, und somit keine Blasen entstehen.

Zum Beispiel beschreiben GB 1 064 841 und EP 469 751 einkomponentige Polyurethane, welche neben Isocyanatgruppen enthaltendent. Prepolymeren als latente Amine Polyaldimine enthalten.

Diese bekannten Systeme weisen jedoch die folgenden Nachteile auf:

Sie benötigen relativ viel Wasser um auszuhärten. Um zwei Mol Prepolymerketten zu addieren werden zwei Mol Wasser benötigt. Es müssen zwei Aldimingruppen eines Polyaldimins hydrolysiert werden, damit die freigesetzten Amingruppen anschliessend beide eine Additionsreaktion mit je einer Isocyanatgruppe einer Prepolymerkette eingehen, und es werden dementsprechend auch zwei Mol Aldehyd freigesetzt. Diese Systeme des Stands der Technik haben deshalb den Nachteil, dass sie in tieferen Schichten langsam durchhärten, da relativ viel Wasser durch die bereits gebildete Haut hindurchdiffundieren muss. Bei Applikationen in dickeren Schichten, was beim Abdichten von Fugen und beim elastischen Verkleben häufig der Fall ist, ist aber eine rasche Durchhärtung erwünscht. Zudem kann der bei der Aushärtung in grösserer Menge entstehende Aldehyd die Materialeigenschaften negativ beeinflussen.

EP 19 906 beschreibt einkomponentige Polyurethan-Systeme, welche neben Isocyanatgruppen aufweisenden Prepolymeren ebenfalls latente Amine enthalten, nämlich Polyurethane, welche als latente Amine Cycloaminale enthalten. Die Cycloaminale werden aus einem Diamin mit zwei sekundären Aminogruppen und einem Aldehyd hergestellt. Als Substituenten an den C-Atomen des Rings werden Wasserstoff und Alkylgruppen genannt. Diese Systeme benötigen nur ein Mol Wasser zur Freisetzung der beiden sekundären Aminogruppen und somit zur Addition von zwei isocyanathaltigen Prepolymerketten, und es wird dabei auch nur ein Mol Aldehyd abgespalten. Die Verwendung von sekundären Aminen als Härter in der Polyurethanchemie weist jedoch den Nachteil auf, dass bei den entstehenden N-substituierten Harnstoffen die Bildung von Wasserstoffbrücken zwischen den Harnstoffen der Polymerketten behindert ist, was sich nachteilig auf die Materialeigenschaften auswirkt.

EP 1 065 beschreibt einkomponentige Polyurethane, welche als latente Amine Cycloaminale enthalten, die ans isocyanathaltige Prepolymer über eine Harnstoffgruppe angehängt sind. Zur Herstellung dieser Cycloaminale werden Diamine mit einer sekundären und einer primären Aminogruppe verwendet.

Sowohl gemäss EP 19 906 als auch nach EP 1 065 werden für die Herstellung der Cycloaminale vorzugsweise Aldehyde verwendet, welche zu Produkten mit einer ungenügenden Lagerstabilität führen, insbesondere in Kombination mit kostengünstigen aromatischen Isocyanaten. Zudem führen diese Aldehyde zu einem intensiven Geruch während der Aushärtung der Produkte, was bei einer Applikation auf grossen Flächen und/oder bei einer Verwendung der Polyurethanmasse im Innern eines Gebäudes stört.

Ziel der vorliegenden Erfindung war es deshalb, ein einkomponentiges Polyurethan bereitzustellen, das auch bei Applikationen in dicken Schichten rasch aushärtet, geringe Tendenz zur Blasenbildung und gute Lagerstabilität aufweist, zu keiner Geruchsbelästigung führt und insbesondere zu einem ausgehärteten Produkt mit verbesserter Alterungsbeständigkeit führt.

Überraschenderweise wurde nun gefunden, dass dieses Ziel bei der Verwendung eines Systems mit ans Prepolymer angebundenen latenten Aminogruppen erreicht wird, zu deren Herstellung ein Aldehyd nach Formel (V) verwendet wurde. Ein solches System führt zu Produkten, welche eine hervorragende Lagerstabilität aufweisen, auch in Kombination mit kostengünstigen aromatischen Isocyanaten, welche ohne störende Geruchsbildung aushärten und auch in ausgehärtetem Zustand keine Geruchsbildung sowie verbesserte Alterungsbeständigkeit aufweisen.

Die feuchtigkeitshärtende einkomponentige Polyurethanmasse gemäss der vorliegenden Erfindung enthält ein Prepolymer, welches neben Isocyanatgruppen auch ans Prepolymer gebundene latente Aminogruppen aufweist. Die Polyurethanmasse kann unter anderem verwendet werden als Dichtmasse für Fugen aller Art, als Klebstoff für elastische Verklebungen oder als elastische Beschichtung für flächige Abdichtungen. Sie zeichnet sich dadurch aus, dass sie blasenfrei und geruchlos aushärtet, dass sie äusserst kostengünstig ist und grosse Langzeitstabilität aufweist.

Unter latenten Aminogruppen werden funktionelle Gruppen verstanden, welche bei Kontakt mit Feuchtigkeit zu Aminogruppen hydrolysieren.

Die latenten Aminogruppen können Aldiminoder Cycloaminalgruppen sein, welche über eine Harnstoffbindung an das Polyurethan-Prepolymer gebunden sind. Beide hydrolysieren unter Abspaltung eines Aldehyds zu Aminen.

Das erfindungsgemässe Prepolymer lässt sich mit Hilfe von Formel (I) beschreiben.

(NCO)ₘ A (B)ₙ (I)

wobei
- A =: ein (m+n)-wertiger Rest, wie er durch die Entfernung von (m+n) Isocyanatgruppen aus einem (m+n)-wertigen Polyurethan-Prepolymer entsteht
- m =: 1 oder 2
- n =: 1 oder 2
- B =: eine latente Aminogruppe, welche über eine Harnstoffbindung an A gebunden ist, gemäss Formel (II) oder (III) 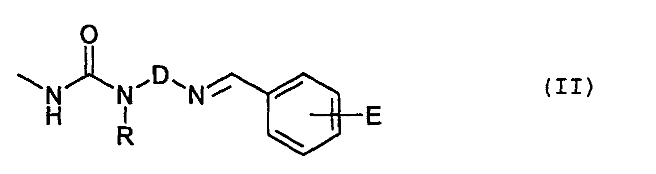 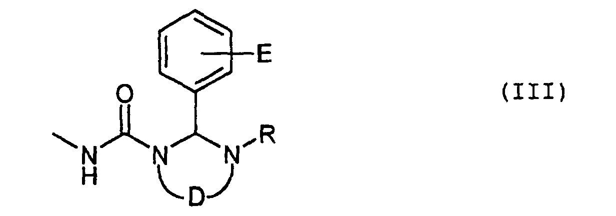
wobei
R für einen aliphatischen Kohlenwasserstoffrest mit 1 bis 8 C-Atomen, für einen cycloaliphatischen Kohlenwasserstoffrest mit 5 bis 15 C-Atomen oder für einen Phenyl- oder Alkylphenylrest mit 7 bis 15 C-Atomen steht,
D für einen zweiwertigen aliphatischen Kohlenwasserstoffrest mit 1 bis 8 C-Atomen, für einen zweiwertigen cycloaliphatischen Kohlenwasserstoffrest mit 5 bis 15 C-Atomen oder für einen zweiwertigen Alkylphenylrest mit 7 bis 15 C-Atomen steht oder,
im Fall von Formel (II), R und D zusammen mit dem Stickstoffatom einen fünf- oder sechsgliedrigen Ring bilden, substituiert durch eine Kohlenwasserstoffkette mit 1 bis 5 C-Atomen, welche die Aldimingruppe trägt, und
E für einen Phenyl-, einen Alkylphenyl-, und insbesondere einen gegebenenfalls substituierten Phenyloxy- oder einen gegebenenfalls substituierten Alkyloxyphenyl-Rest steht, wobei als Substituenten Alkylgruppen und Alkyloxygruppen bevorzugt sind. Obschon substituierte Phenyloxy- und Alkyloxyphenyl-Reste möglich sind, sind unsubstituierte Reste bevorzugt, da sie leichter erhältlich und damit wirtschaftlicher sind.

Die Verbindung B wird hergestellt ausgehend von einem geeigneten Diamin mit einer primären und einer sekundären Aminogruppe der allgemeinen Formel (IV) 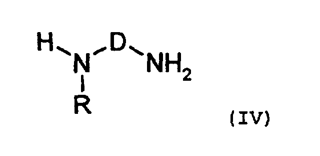 wobei
R für einen aliphatischen Kohlenwasserstoffrest mit 1 bis 8 C-Atomen, für einen cycloaliphatischen Kohlenwasserstoffrest mit 5 bis 15 C-Atomen oder für einen Phenyl- oder Alkylphenylrest mit 7 bis 15 C-Atomen steht,
D für einen zweiwertigen aliphatischen Kohlenwasserstoffrest mit 1 bis 8 C-Atomen, für einen zweiwertigen cycloaliphatischen Kohlenwasserstoffrest mit 5 bis 15 C-Atomen oder für einen zweiwertigen Alkylphenylrest mit 7 bis 15 C-Atomen steht, oder,
R und D bilden zusammen mit dem Stickstoffatom der sekundären Aminogruppe einen fünf- oder sechsgliedrigen Ring, substituiert durch eine Kohlenwasserstoffkette mit 1 bis 5 C-Atomen, welche die primäre Aminogruppe trägt.

Beispielhaft seien die folgenden Amine genannt: N-Methyl-ethylendiamin, N-Methyl-propylendiamin, N-Ethyl-ethylendiamin, N-Cyclohexyl-propylendiamin, 4-Aminomethyl-piperidin, 3-(4-Aminobutyl)piperidin und 4-Amino-benzylamin. N-Aminoethyl-piperazin ist weniger geeignet, da die tertiäre Aminogruppe durch katalytische Effekte die Lagerstabilität des erfindungsgemässen Prepolymers verschlechtert.

Das Diamin (IV) wird nach literaturbekannten Methoden im Molverhältnis 1:1 mit einem geeigneten Aldehyd umgesetzt, wobei das bei der Kondensation gebildete Wasser beispielsweise über einen Wasserabscheider entfernt wird.

Der geeignete Aldehyd (V) ist in der folgenden Formel dargestellt 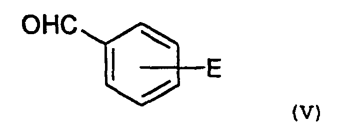 wobei E für einen Phenyl-, einen Alkylphenyl-, und insbesondere für einen gegebenenfalls substituierten Phenyloxy- oder einen gegebenenfalls substituierten Alkyloxyphenyl-Rest steht. (Zur Substitution der Reste siehe vorne).

Als besonders geeigneter Aldehyd sei 3-Phenoxy-benzaldehyd erwähnt, siehe untenstehende Formel:

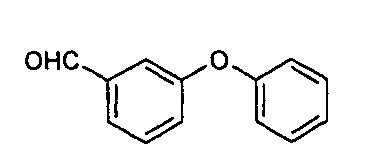

Aus technischer Sicht wäre Furfural ebenfalls geeignet. Wegen ihrer Toxizität sollte diese Verbindung aber nicht eingesetzt werden.

Das Reaktionsprodukt dieser Umsetzung kann entweder ein Amino-Aldimin (VI), siehe folgende Formel: 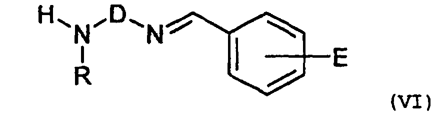 oder ein Cycloaminal (VII) sein, siehe folgende Formel:

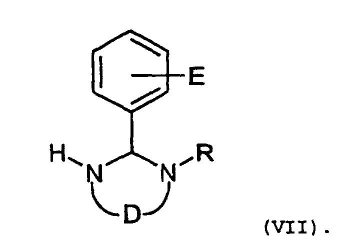

Bei der Umsetzung des Diamins (IV) mit dem Aldehyd (V) findet üblicherweise eine Cyclisierung zu einem Cycloaminal (VII) unter der Voraussetzung statt, dass die beiden Stickstoffatome des Diamins durch eine Ethylen- oder eine Propylen-Einheit getrennt sind, so dass ein fünf- oder ein sechsgliedriger Ring gebildet wird. Zusätzlich muss der Rest R an der sekundären Aminogruppe relativ klein sein. Ist R zu gross, so bewirkt die sterische Wechselwirkung zwischen dem Rest R und dem an das Diamin kondensierten Aldehyd-Rest, dass nicht die Cyclisierung stattfindet, sondern statt dessen das Amino-Aldimin gebildet wird. Dies sei nachfolgend anhand zweier N-substituierter Propylendiamine diskutiert. Ist R beispielsweise eine Methylgruppe, so entsteht das Cycloaminal (VII/1), ist R beispielsweise eine Cyclohexylgruppe, so entsteht das Amino-Aldimin (VI/1), wie im untenstehenden Schema dargestellt:

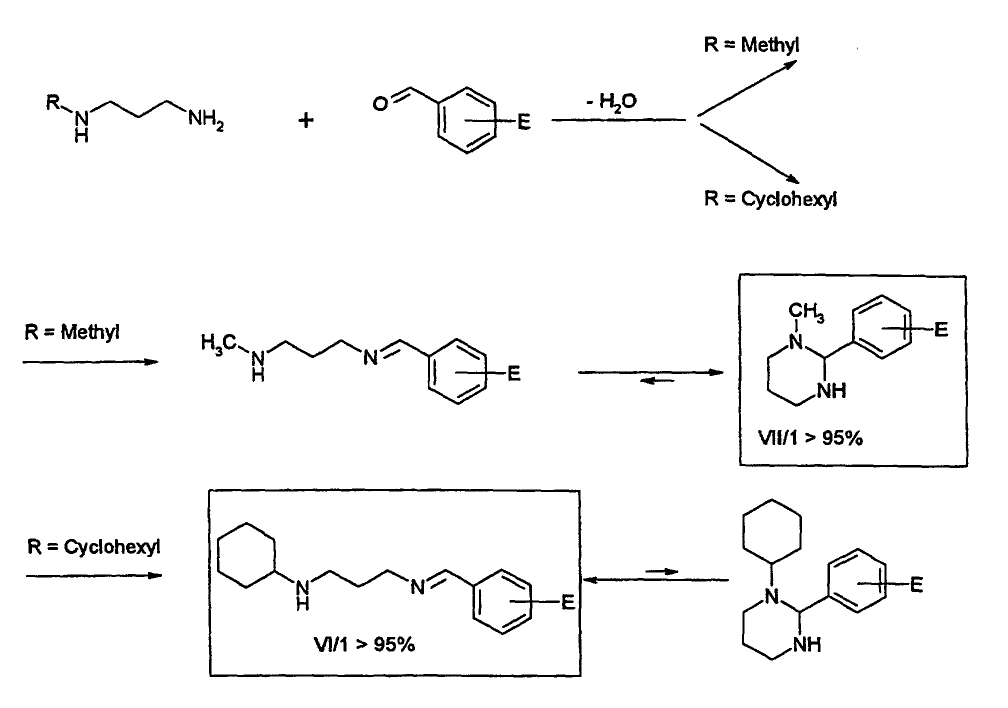

Beide Kondensationsprodukte, sowohl das Amino-Aldimin (VI) als auch das Cycloaminal (VII), weisen eine NH-Gruppe auf, über welche sie nach literaturbekannten Methoden an eine Isocyanatgruppe eines Prepolymers addiert werden können, wobei das erfindungsgemässe Polyurethan-Prepolymer (I) mit Isocyanatgruppen und latenten Aminogruppen entsteht. Gemäss Hesse et al., Helv. Chim. Acta 1997, 80, 996 kann ein Cycloaminal, welches ausgehend von einem Propylendiamin mit einer sekundären und einer primären Aminogruppe und einem Aldehyd hergestellt wurde, sowohl am primären als auch am sekundären Stickstoff mit einem Elektrophil wie z.B. einer Isocyanatgruppe reagieren, je nach der Grösse und der Elektronenstruktur der vorhandenen Substituenten. Im Falle von Cycloaminalen (VII) muss davon ausgegangen werden, dass - wie in der Literatur beschrieben - die Annäherung der Isocyanatgruppe an die NH-Gruppe des Cycloaminals aufgrund des grossen aromatischen Substituenten am Aminal-C behindert ist und das Molekül deshalb vermutlich zumindest mehrheitlich über die tautomere Struktur (VI) am anderen Stickstoff reagiert. Das würde heissen, dass das Reaktionsprodukt des isocyanathaltigen Prepolymers (VIII) mit dem Cycloaminal (VII) zumindest mehrheitlich dasselbe ist wie mit dem Amino-aldimin (VI), nämlich das erfindungsgemässe Polymer (I), wobei B in der Form von Struktur (II), also in der Form des Aldimins, vorliegen würde. Diese Betrachtungen zur Struktur sollen die Erfindung in keiner Weise beschränken.

Ein geeignetes Prepolymer, an welches das Amino-Aldimin (VI) oder das Cycloaminal (VII) angehängt wird, ist das Umsetzungsprodukt eines Polyols mit einem Polyisocyanat, wobei die Isocyanatkomponente im überschuss eingesetzt wird, so dass nach dem Abreagieren aller OH-Gruppen ein Polyurethan-Prepolymer mit Isocyanatendgruppen entstanden ist, dargestellt durch die allgemeine Formel

A(NCO)ₘ₊ₙ (VIII),

wobei A die bereits beschriebene Bedeutung hat. Das mittlere Molekulargewicht dieses Prepolymers liegt im Bereich von 500 bis 20'000 g/Mol.

Als Polyole zur Herstellung eines solchen Prepolymers kommen die folgenden, in der Polyurethanchemie bestens bekannten Rohstoffe oder Mischungen davon in Frage:

Polyetherpolyole, welche das Polymerisationsprodukt aus Ethylenoxid, Propylenoxid oder Butylenoxid oder Mischungen davon sind, wobei insbesondere solche mit einem geringen Ungesättigtheitsgrad (< 0.07 Doppelbindungsequivalente / mol) vorteilhaft sind, sowie

Polyesterpolyole, hergestellt aus zwei- bis dreiwertigen Alkoholen wie beispielsweise Ethylenglykol, Propylenglykol, Hexandiol, Neopentylglykol, Glycerin, Trimethylolpropan oder Diethylenglykol mit unterschüssigen Mengen an zweiwertigen Carbonsäuren oder deren Anhydride oder Ester wie beispielsweise Adipinsäure, Phthalsäure, Hexahydrophthalsäureanhydrid oder Maleinsäure,
oder hydroxyterminierte Polybutadienpolymere.

Die Polyole weisen im allgemeinen eine OH-Funktionalität von 1,5 bis 3 und ein Molekulargewicht von 500 bis 20'000 g/Mol auf.

Zusätzlich zu den genannten Polyolen können Verbindungen mit zwei oder mehr OH-Gruppen als Kettenverlängerer oder Vernetzer mitverwendet werden. Als Beispiele seien 1,4-Butandiol und Trimethylolpropan genannt.

Als Polyisocyanate zur Herstellung eines solchen Prepolymers kommen aliphatische, cycloaliphatische oder aromatische Isocyanate mit mindestens zwei Isocyanatgruppen pro Molekül in Frage. Als Beispiele seien die folgenden, in der Polyurethanchemie bestens bekannten Isocyanate erwähnt:
2,4- und 2,6-Toluoldiisocyanat, 4,4'- und 2,4'-Diphenylmethandiisocyanat, Isophorondiisocyanat, 2,2,4- und 2,4,4-Trimethyl-1,6-hexamethylendiisocyanat, 1,6-Hexamethylendiisocyanat, m- und p-Tetramethylxylylen-diisocyanat und die Isomeren des 4,4' - oder 2,4'-Dicyclohexylmethandiisocyanats, sowie Polymere oder Oligomere dieser Isocyanate sowie Mischungen aus zwei oder mehr der angegebenen Isocyanatkomponenten.

Die Polyol- und die Isocyanatkomponente werden nach üblichen Verfahren, z.B. bei Temperaturen von 50 bis 100°C, gegebenenfalls unter Mitverwendung von geeigneten Katalysatoren, umgesetzt, wobei die Isocyanatkomponente im Überschuss eingesetzt wird. Als Reaktionsprodukt entsteht das erwähnte Polyurethanprepolymer mit Isocyanat-Endgruppen.

Bei der Umsetzung des Amino-Aldimins (VI) beziehungsweise des Cycloaminals (VII) mit dem Polyurethan-Prepolymer wird das erfindungsgemässe Prepolymer gebildet, welches sowohl Isocyanatgruppen als auch latente Aminogruppen enthält, siehe untenstehende Formel:

(NCO)ₘ A (B)ₙ (I),

wobei B für die angehängte latente Aminogruppe steht, gemäss den beiden folgenden Formeln: 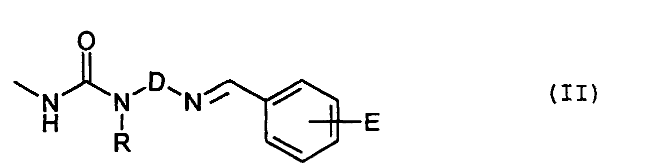 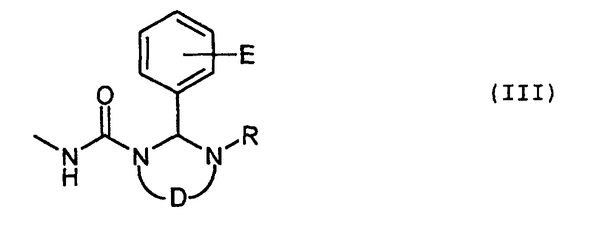 A, R, D und E weisen die bereits beschriebene Bedeutung auf.

Beide möglichen Ausführungsformen von B, sowohl diejenige mit angehängten Aldimingruppen (II) als auch diejenige mit angehängten Cycloaminalgruppen (III), sind latente Amine. Beim Kontakt mit Feuchtigkeit reagiert Wasser mit dem latenten Amin. Der Aldehyd, welcher zur Blockierung eingesetzt wurde, wird dabei abgespalten, und es bilden sich Aminogruppen, welche sofort mit den Isocyanatgruppen des erfindungsgemässen Prepolymers reagieren. Die Prepolymerketten werden dadurch über Harnstoffbindungen miteinander verbunden. Durch eine geeignete Katalyse, beispielsweise mit organischen Säuren oder organischen Säureanhydriden, kann die Deblockierung der latenten Amine mit Wasser gegenüber der Isocyanat-Wasser-Reaktion selektiv beschleunigt werden.

Zusätzlich kann zu dem erfindungsgemässen Prepolymer mit Isocyanatgruppen und latenten Aminogruppen (I) eine weitere Polyisocyanat-Verbindung mit zwei- oder mehr Isocyanatgruppen, beispielsweise ein Diisocyanat-Monomer, ein Diisocyanat-Oligomer oder ein Isocyanatterminiertes Polyurethan-Prepolymer, beigemischt werden. Das molare Verhältnis aller Isocyanatgruppen zu den latenten Aminogruppen beträgt insgesamt 1:1 bis 1:0.2. Sind mehr Isocyanatgruppen als latente Aminogruppen vorhanden, so reagieren die überschüssigen Isocyanatgruppen bei der Aushärtung direkt mit Luftfeuchtigkeit, wobei unter CO₂-Abspaltung ebenfalls Harnstoffbindungen entstehen.

Die erfindungsgemässe Masse benötigt gegenüber einer üblichen Masse mit den getrennt vorliegenden Komponenten Prepolymer und Polyaldimin nur die halbe Menge Wasser um zu vernetzen. Ein Mol Wasser genügt, um zwei Mol Polymerketten zu addieren, wobei ein Mol Aldehyd abgespalten wird. Dadurch eignet sie sich ausgezeichnet für eine Applikation in dickeren Schichten, da weniger Wasser durch die bereits gebildete Haut hindurchdiffundieren muss und deshalb eine schnellere Durchhärtung erreicht wird. Diese Massen eignen sich deshalb insbesondere zum Abdichten von Fugen und zum elastischen Verkleben, wo eine rasche Durchhärtung von grossem Vorteil ist.

Die Festigkeit des erfindungsgemässen Polymers wird schneller aufgebaut als bei den üblichen Systemen mit nicht am Polymer hängenden Polyaldiminen. Da das latente Amin im erfindungsgemässen Polymer bereits an einer Prepolymerkette hängt, sind nur halb soviele Additionsreaktionen nötig, um die Festigkeit des Polymers aufzubauen. Dies führt dazu, dass das erfindungsgemässe Polymer weniger anfällig ist auf Blasenbildung, selbst wenn das latente Amin im Verhältnis zum Isocyanat im Unterschuss dosiert ist. Der Druck des CO₂-Gases, welches bei der Vernetzung überschüssiger Isocyanatgruppen gebildet wird, kann durch die bereits aufgebaute Festigkeit besser aufgefangen werden. Dadurch ist es möglich, blasenfrei aushärtende Formulierungen mit einem Ueberschuss an Isocyanatgruppen im Verhältnis zu den latenten Aminogruppen zu formulieren. Dies hat mehrere Vorteile. Einerseits können dadurch Kosten gespart werden, da die latenten Amine im Vergleich zu den anderen Komponenten teuer sind, und andererseits wird weniger Aldehyd abgespalten.

Aldehyde üben in Polyurethanen einen Weichmachereffekt aus. Insbesondere flüchtige Aldehyde haben somit zwei wesentliche Nachteile. Erstens die Geruchsbelästigung während der Verarbeitung der Polyurethanmasse, zweitens eine mögliche über längere Zeit andauernde Geruchsbelästigung infolge der Diffusion des Aldehyds aus der ausgehärteten Masse. Aber selbst wenn diese Diffusion ohne wesentliche Geruchsbelästigung vor sich geht, so führt sie zu einer Versprödung der Masse infolge Abnahme der Konzentration an weichmachendem Aldehyd.

Trotz genau abgestimmten Zusätzen weisen solche Massen mangelhafte Alterungsbeständigkeit auf.

Aufgrund des speziellen Aufbaus der erfindungsgemässen Massen kann einerseits die freigesetzte Aldehydmenge tief gehalten werden und durch die Wahl des speziellen Aldehyds mit zwei Arylgruppen kann die Abgabe des Aldehyds an die Umgebung praktisch verhindert werden. Eine Geruchsbelästigung während der Verarbeitung und danach unterbleibt und der Aldehyd verbleibt im Polyurethan, wodurch die Alterungsbeständigkeit stark erhöht wird.

Als speziell geeignet herausgestellt hat sich beispielsweise Phenoxybenzaldehyd.

Das erfindungsgemässe Polymer härtet bei Kontakt mit Luftfeuchtigkeit geruchsfrei und ohne Blasenbildung aus. Es ermöglicht kostengünstige Formulierungen, da es einerseits eine hervorragende Lagerstabilität auch bei der Verwendung kostengünstiger aromatischer Isocyanate aufweist, und andererseits mit einer vergleichsweise niedrigen Dosierung der latenten Aminogruppen bereits blasenfrei aushärtet.

Das erfindungsgemässe Prepolymer kann verwendet werden zur Formulierung von elastischen Dichtmassen für Fugen aller Art, von Klebstoffen für elastische Verklebungen und von Beschichtungsmassen für flächige Abdichtungen. Um den jeweiligen Erfordernissen zu genügen, kann es Zusätze enthalten wie Weichmacher, Lösemittel, anorganische oder organische Füllstoffe, Pigmente, Fasern, Thixotropiermittel, Verdickungsmittel, Verlaufsmittel, Entlüftungsmittel, Haftvermittler, Antioxidantien, Lichtschutzmittel und Katalysatoren.

Die folgenden Beispiele dienen zur weiteren Erläuterung der Erfindung und sollen diese in keiner Weise einschränken.

### Beispiele

### Bemerkungen:

GT steht für Gewichtsteil.

Der NCO-Ueberschuss ist angegeben in Gewichtsprozent NCO-Gruppen bezogen auf die ganze Formulierung.

Die Lagerstabilität wurde bestimmt durch Lagerung der Massen im verschlossenen Gebinde bei 60°C während 14 Tagen und anschliessender Beurteilung der Verarbeitungskonsistenz.

Die Zugfestigkeit und die Bruchdehnung wurden bestimmt an ausgehärteten Filmen nach DIN 53504 (S2).

Die Zugscherfestigkeit wurde bestimmt auf Glas nach BS EN 1465:1995.

Die Blasenbildung wurde bestimmt durch Aushärtung bei 60°C auf einer Tannenholzfläche 110 × 40 mm in einer keilförmigen Schicht, beginnend mit einer Schichtdicke von 5 mm, der Längsseite entlang ausgestrichen auf 0 mm.

Der Gewichtsverlust wurde bestimmt bei 40°C an einem zylinderförmigen Prüfkörper mit einem Durchmesser von 34 mm und einer Höhe von 6 mm.

### Beispiel 1

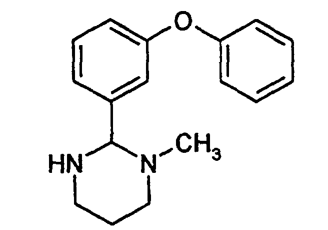

131.4 GT 3-(Methylamino)-propylamin wurden in einer geeigneten Apparatur, z.B. einem Vierhals-Glaskolben ausgerüstet mit einem mechanischen Rührer, unter Stickstoffatmosphäre vorgelegt. Unter Kühlung und gutem Rühren wurden langsam 298.5 GT 3-Phenoxy-benzaldehyd zugetropft (Dauer ca. 1 Stunde). Anschliessend wurde unter Vakuum bei 80°C das bei der Reaktion gebildete Wasser abdestilliert.

Das gebildete Cycloaminal wies eine Aminzahl von 415.5 mg KOH/g auf, die Ausbeute betrug 403.0 GT.

### Beispiel 2

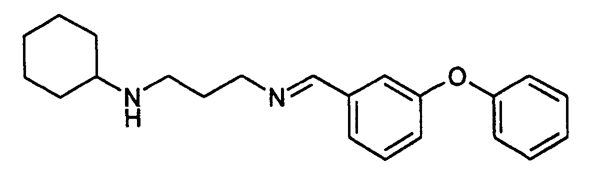

215.0 GT 3-(Cyclohexylamino)-propylamin wurden in einer geeigneten Apparatur, z.B. einem Vierhals-Glaskolben ausgerüstet mit einem mechanischen Rührer, unter Stickstoffatmosphäre vorgelegt. Unter Kühlung und gutem Rühren wurden langsam 275.6 GT 3-Phenoxy-benzaldehyd zugetropft (Dauer ca. 1 Stunde). Anschliessend wurde unter Vakuum bei 80°C das bei der Reaktion gebildete Wasser abdestilliert.

Das gebildete Aminoaldimin wies eine Aminzahl von 328.3 mg KOH/g auf, die Ausbeute betrug 465.8 GT.

### Beispiel 3

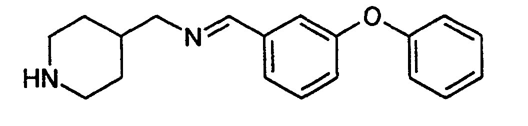

101.1 GT 4-Aminomethyl-piperidin wurden in einer geeigneten Apparatur, z.B. einem Vierhals-Glaskolben ausgerüstet mit einem mechanischen Rührer, unter Stickstoffatmosphäre vorgelegt. Unter Kühlung und gutem Rühren wurden langsam 177.3 GT 3-Phenoxy-benzaldehyd zugetropft (Dauer ca. 1 Stunde). Anschliessend wurde unter Vakuum bei 80°C das bei der Reaktion gebildete Wasser abdestilliert.

Das gebildete Aminoaldimin wies eine Aminzahl von 378.4 mg KOH/g auf, die Ausbeute betrug 262.5 GT.

### Vergleichsbeispiel 1

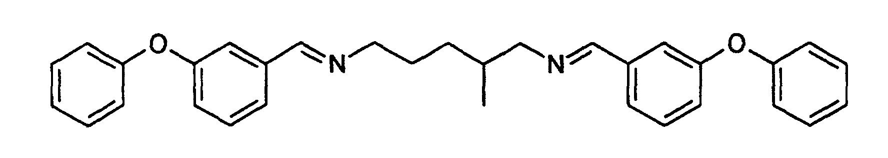

420 GT 3-Phenoxy-benzaldehyd wurden in einer geeigneten Apparatur, z.B. einem Vierhals-Glaskolben ausgerüstet mit einem mechanischen Rührer, unter Stickstoffatmosphäre vorgelegt. Unter Kühlung und gutem Rühren wurden langsam 121.9 GT 2-Methyl-1,5-pentandiamin zugetropft (Dauer ca. 1 Stunde). Anschliessend wurde unter Vakuum bei 80°C das bei der Reaktion gebildete Wasser abdestilliert.

Das gebildete Dialdimin wies eine Aminzahl von 232 mg KOH/g auf, die Ausbeute betrug 504.1 GT.

### Vergleichsbeispiel 2

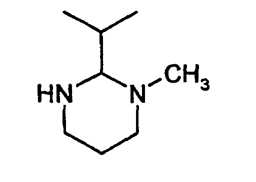

247.9 GT 3-(Methylamino)-propylamin wurden in einer geeigneten Apparatur, z.B. einem Vierhals-Glaskolben ausgerüstet mit einem mechanischen Rührer, unter Stickstoffatmosphäre vorgelegt. Unter Kühlung und gutem Rühren wurden langsam 204.8 GT Isobutyraldehyd zugetropft (Dauer ca. 1 Stunde). Anschliessend wurde unter Vakuum bei 80°C das bei der Reaktion gebildete Wasser abdestilliert.

Das gebildete Cycloaminal wies eine Aminzahl von 778.0 mg KOH/g auf, die Ausbeute betrug 402.1 GT.

### Beispiel 4, TDI-Prepolymer

240 GT eines Polypropylenoxid-Triols mit einem mittleren Molekulargewicht von 4000, z.B. Voranol CP 4055 von Dow, 120 GT eines Polypropylenoxid-Diols mit einem mittleren Molekulargewicht von 2000, z.B. Voranol CP 2025 von Dow, und 54 GT Toluoldiisocyanat (Gemisch aus 80% 2,4-Isomer und 20% 2,6 Isomer) wurden in einer geeigneten Apparatur, z.B. einem Vierhals-Glaskolben ausgerüstet mit einem mechanischen Rührer, unter Stickstoffatmosphäre gemischt, für 4 Stunden bei 80°C gerührt und anschliessend abgekühlt und in einem geschlossenen Gebinde gelagert. Der Gehalt an freien Isocyanatgruppen betrug 3.28%.

### Beispiel 5, MDI-Prepolymer

240 GT eines Polypropylenoxid-Triols mit einem mittleren Molekulargewicht von 4000, z.B. Voranol CP 4055 von Dow, 120 GT eines Polypropylenoxid-Diols mit einem mittleren Molekulargewicht von 2000, z.B. Voranol CP 2025 von Dow, und 80 GT 4,4'-Diphenylmethandiisocyanat wurden in einer geeigneten Apparatur, z.B. einem Vierhals-Glaskolben ausgerüstet mit einem mechanischen Rührer, unter Stickstoffatmosphäre gemischt, für 19 Stunden bei 80°C gerührt und anschliessend abgekühlt und in einem geschlossenen Gebinde gelagert. Der Gehalt an freien Isocyanatgruppen betrug 3.18%.

| **Dichtstoff-Rezeptur für Beispiel 6, 7 und 8 und Vergleichsbeispiel 3 und 4** | |
|---|---|
| Pos 1 50 GT | Prepolymer aus Beispiel 4 |
| Pos 2 20 GT | Mesamoll (Weichmacher von Bayer) |
| Pos 3 3 GT | Cabosil TS-720* (Hydrophobe pyrogene Kieselsäure von Cabot) |
| Pos 4 5 GT | Titandioxid ** |
| Pos 5 20 GT | Omya BLR 2 ** (Kreidepulver von Omya) |
| Pos 6 0.1 GT | Hexahydrophthalsäureanhydrid |

| | |
|---|---|
| * während 15 Stunden bei 100°C getrocknet | |
| ** während 15 Stunden bei 120°C getrocknet | |

### Beispiel 6

Position 1 bis 5 der Dichtstoff-Rezeptur wurden in einem geeigneten Mischer, z.B. Planimax von Molteni, Mailand, Italien, unter Vakuum homogen vermischt. Anschliessend wurden 3.51 GT des Cycloaminals aus Beispiel 1 sowie die Position 6 der Dichtstoffrezeptur zugegeben und ebenfalls unter Vakuum homogen eingemischt. Der Dichtstoff wurde dann in luftdichte Kartuschen abgefüllt.
Resultate siehe Tabelle 1.

### Beispiel 7

Position 1 bis 5 der Dichtstoff-Rezeptur wurden in einem geeigneten Mischer, z.B. Planimax von Molteni, unter Vakuum homogen vermischt. Anschliessend wurden 4.36 GT des Aminoaldimins aus Beispiel 2 sowie die Position 6 der Dichtstoffrezeptur zugegeben und ebenfalls unter Vakuum homogen eingemischt. Der Dichtstoff wurde dann in luftdichte Kartuschen abgefüllt.
Resultate siehe Tabelle 1.

### Beispiel 8

Pos 1 bis 5 der Dichtstoff-Rezeptur wurden in einem geeigneten Mischer, z.B. Planimax von Molteni, unter Vakuum homogen vermischt. Anschliessend wurden 3.81 GT des Aminoaldimins aus Beispiel 3 sowie die Pos 6 der Dichtstoffrezeptur zugegeben und ebenfalls unter Vakuum homogen eingemischt. Der Dichtstoff wurde dann in luftdichte Kartuschen abgefüllt.
Resultate siehe Tabelle 1.

### Vergleichsbeispiel 3

Position 1 bis 5 der Dichtstoff-Rezeptur wurden in einem geeigneten Mischer, z.B. Planimax von Molteni, unter Vakuum homogen vermischt. Anschliessend wurden 3.02 GT des Dialdimins aus Vergleichsbeispiel 1 sowie die Position 6 der Dichtstoffrezeptur zugegeben und ebenfalls unter Vakuum homogen eingemischt. Der Dichtstoff wurde dann in luftdichte Kartuschen abgefüllt.
Resultate siehe Tabelle 1.

### Vergleichsbeispiel 4

Position 1 bis 5 der Dichtstoff-Rezeptur wurden in einem geeigneten Mischer, z.B. Planimax von Molteni, unter Vakuum homogen vermischt. Anschliessend wurden 1.86 GT des Cycloaminals aus Vergleichsbeispiel 2 sowie die Position 6 der Dichtstoffrezeptur zugegeben und ebenfalls unter Vakuum homogen eingemischt. Der Dichtstoff wurde dann in luftdichte Kartuschen abgefüllt.
Resultate siehe Tabelle 1.

### Beispiel 9, Klebstoff

50 GT des Prepolymers aus Beispiel 5, 15 GT Mesamoll (Weichmacher von Bayer), 15 GT Russ ** und 20 GT Omya BLR 2 ** (Kreidepulver von Omya) wurden in einem geeigneten Mischer, z.B. Planimax von Molteni, unter Vakuum homogen vermischt. Anschliessend wurden 5.26 GT des Cycloaminals aus Beispiel 1, sowie 10 GT Xylol und 0.1 GT Hexahydrophthalsäureanhydrid zugegeben und ebenfalls unter Vakuum homogen eingemischt. Der Klebstoff wurde anschliessend in luftdichte Kartuschen abgefüllt.
** während 15 Stunden bei 120 °C getrocknet

Der Klebstoff wies eine pastöse Konsistenz auf. Die Lagerstabilität war ausgezeichnet. Bei der Aushärtung auf Tannenholz bei 60°C bildeten sich keine Blasen und der Klebstoff härtete geruchlos aus. Die Durchhärtung betrug 6 mm nach drei Tagen bei Raumtemperatur. Die Zugfestigkeit betrug 4.7 MPa, die Bruchdehnung 900% und die Zugscherfestigkeit 3.4 MPa.

### Beispiel 10, Beschichtung

50 GT des Prepolymers aus Beispiel 4, 1 GT Cabosil TS-720 * (Hydrophobe pyrogene Kieselsäure von Cabot), 5 GT Titandioxid ** und 30 GT Omya BLR2 ** (Kreidepulver von Omya) wurden in einem geeigneten Mischer, z.B. Planimax von Molteni, unter Vakuum homogen vermischt. Anschliessend wurden 5.26 GT des Cycloaminals aus Beispiel 1, sowie 15 GT Solvent Naphta leicht (von Aral) sowie 0.1 GT Hexahydrophthalsäureanhydrid zugegeben und ebenfalls unter Vakuum homogen eingemischt. Die Beschichtungsmasse wurde anschliessend in ein luftdichtes Gebinde abgefüllt.
* während 15 Stunden bei 100° C getrocknet

Die Beschichtung wies eine flüssige, selbstnivellierende Konsistenz auf. Die Lagerstabilität war ausgezeichnet. Bei der Aushärtung auf Tannenholz bei 60°C bildeten sich keine Blasen und die Beschichtung härtete geruchlos aus. Die Durchhärtung betrug 6 mm nach drei Tagen bei Raumtemperatur. Die Zugfestigkeit betrug 2.4 MPa und die Bruchdehnung 800%.

**Tabelle 1**

| **Resultate der Dichtstoff-Rezepturen** | | | | | |
|---|---|---|---|---|---|
| | **Bsp. 6** | **Bsp. 7** | **Bsp. 8** | **Vergleichsbsp. 3** | **Vergleichsbsp. 4** |
| NCO - Ueberschuss (nach dem Abreagieren der latenten Aminogruppen) | 0.55 % | 0.55 % | 0.55 % | 0.55 % | 0.55 % |
| Lagerstabilität | gut | gut | gut | gut | nicht stabil |
| Durchhärtung nach 3 Tagen | 3.5 mm | 4 mm | 4.3 mm | 1.8 mm | nicht geprüft* |
| Zugfestigkeit | 2.4 MPa | 2.1 MPa | 2.7 MPa | 2.6 MPa | nicht geprüft* |
| Bruchdehnung | 500% | 320% | 350% | 600% | nicht geprüft* |
| Blasenbildung | keine | keine | keine | sehr viele Blasen | nicht geprüft* |
| Geruch | geruchlos | geruchlos | geruchlos | geruchlos | intensiv, unangenehm |
| Gewichtsverlust nach 4 Wo 40°C | 0% | 0% | 0% | 0% | 0.9 % |

| | | | | | |
|---|---|---|---|---|---|
| * Material nicht mehr verarbeitbar nach wenigen Tagen Lagerung bei Raumtemperatur | | | | | |

### Diskussion der Resultate aus Tabelle 1:

Die Beispiele 6, 7 und 8 unterscheiden sich dadurch, dass unterschiedliche Diamine mit einer primären und einer sekundären Aminogruppe eingesetzt wurden, welche bei der Blockierung mit 3-Phenoxy-benzaldehyd je nach der Geometrie des Diamins eine Cycloaminal-Struktur oder eine Aldimin-Struktur ausbildeten (vergleiche Beispiele 1 bis 3). Unabhängig davon, ob die latente Aminogruppe in der Form eines Cycloaminals (Beispiel 6) oder in der Form eines Aldimins (Beispiele 7 und 8) vorlag, wiesen alle drei Dichtstoffe eine gute Lagerstabilität auf, härteten schnell aus, ohne Blasenbildung und ohne störenden Geruch, zeigten gute mechanische Festigkeiten und wiesen während und nach der Aushärtung keinen Gewichtsverlust auf.

Die Beispiele 6, 7 und 8 und das Vergleichsbeispiel 3 unterscheiden sich dadurch, dass bei den Beispielen 6, 7 und 8 die latenten Aminogruppen an das Prepolymer angebunden sind, während beim Vergleichsbeispiel 3 ein Dialdimin eingesetzt wurde, welches nicht am Prepolymer angebunden ist. Der Gehalt an NCO-Gruppen, welche nach dem Abreagieren aller latenten Aminogruppen übrigbleiben und somit durch eine Reaktion mit Feuchtigkeit unter CO₂-Abspaltung aushärten, ist bei allen vier Beispielen gleich hoch. Durch das Anhängen der latenten Aminogruppen ans Prepolymer benötigen die Dichtstoffe der Beispiele 6, 7 und 8 weniger Wasser zur Vernetzung der Polymerketten. Man erkennt deutlich, wie diese Dichtstoffe dadurch schneller durchhärten als der Dichtstoff des Vergleichsbeispiels 3. Nach drei Tagen wiesen sie bereits eine ausgehärtete Haut von 3.5 bis 4.3 mm auf, während der Dichtstoff des Vergleichsbeispiels 3 erst bis in eine Tiefe von 1.8 mm durchgehärtet war. Auch bezüglich der Blasenbildung besteht ein deutlicher Unterschied. Die Dichtstoffe der Beispiele 6, 7 und 8 bildeten trotz des NCO-Ueberschusses von 0.55% keine Blasen, während der Dichtstoff des Vergleichsbeispiels 3 eine starke Blasenbildung zeigte.

Das Beispiel 6 und das Vergleichsbeispiel 4 unterscheiden sich durch den Aldehyd, welcher zur Blockierung der primären Aminogruppe verwendet wurde. Im Beispiel 6 ist die latente Aminogruppe durch Reaktion mit 3-Phenoxy-benzaldehyd gebildet worden, im Vergleichsbeispiel 4 hingegen mit Isobutyraldehyd. Deshalb weist der Dichtstoff des Vergleichsbeispiels 4 eine Reihe von Nachteilen auf. Die Lagerstabilität ist sehr schlecht. Bereits nach wenigen Tagen bei Raumtemperatur lässt sich der Dichtstoff nicht mehr verarbeiten. Zudem riecht er äusserst intensiv und unangenehm, bis das Material ausgehärtet und der abgespaltene Aldehyd vollständig verdampft ist. Dementsprechend weist er während der Aushärtung (4 Wochen 40° C) einen Gewichtsverlust von 0.9 % auf, was ungefähr der Menge Isobutyraldehyd entspricht, welche abgespalten wird. Der Dichtstoff des Beispiels 6 hingegen besitzt eine gute Lagerstabilität, und das Material härtet geruchlos und ohne Gewichtsverlust aus.

## Patentansprüche

1. Feuchtigkeitshärtende einkomponentige Polyurethanmasse, enthaltend ein Prepolymer, dargestellt durch die folgende Formel
(NCO) ₘ A (B)ₙ (I),
in welcher A für einen (m+n)-wertiger Rest, wie er durch die Entfernung von (m+n) Isocyanatgruppen aus einem (m+n)-wertigen Polyurethan-Prepolymer entsteht, **dadurch gekennzeichnet, dass**
m für 1 oder 2 steht,
n für 1 oder 2 steht und
B für eine latente Aminogruppe, welche über eine Harnstoffbindung an A gebunden ist, steht, wobei B durch eine der beiden folgenden Formeln definiert ist 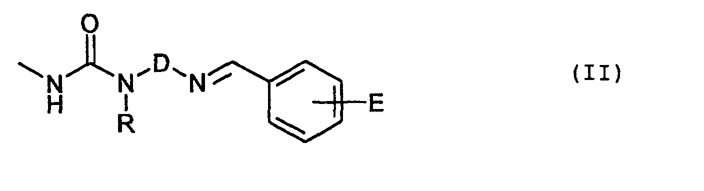 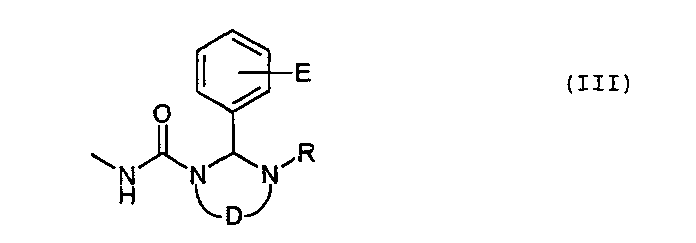 wobei R für einen aliphatischen Kohlenwasserstoffrest mit 1 bis 8 C-Atomen, für einen cycloaliphatischen Kohlenwasserstoffrest mit 5 bis 15 C-Atomen oder für einen Phenyl- oder Alkylphenylrest mit 7 bis 15 C-Atomen steht,
D für einen zweiwertigen aliphatischen Kohlenwasserstoffrest mit 1 bis 8 C-Atomen, für einen zweiwertigen cycloaliphatischen Kohlenwasserstoffrest mit 5 bis 15 C-Atomen oder für einen zweiwertigen Alkylphenylrest mit 7 bis 15 C-Atomen steht, oder,
im Fall von Formel (II), R und D zusammen mit dem Stickstoffatom einen fünf- oder sechsgliedrigen Ring bilden, substituiert durch eine Kohlenwasserstoffkette mit 1 bis 5 C-Atomen, welche die Aldimingruppe trägt, und
E für einen Phenyl-, einen Alkylphenyl-, einen gegebenenfalls substituierten Phenyloxy- oder einen gegebenenfalls substituierten Alkyloxyphenyl-Rest steht.

2. Die Polyurethanmasse nach Anspruch 1, **dadurch gekennzeichnet, dass** der Rest E für eine Phenoxygruppe in 3-Stellung steht.

3. Die Polyurethanmasse nach Anspruch 1 oder 2, **dadurch gekennzeichnet, dass** der (m+n)-wertige Polyurethan-Prepolymer-Rest aus aromatischen Isocyanat-Einheiten aufgebaut ist.

4. Die Polyurethanmasse nach Anspruch 1 oder 2, **dadurch gekennzeichnet, dass** der (m+n)-wertige Polyurethan-Prepolymer-Rest aus aliphatischen Isocyanat-Einheiten aufgebaut ist.

5. Die Polyurethanmasse nach einem der Ansprüche 1 bis 4, **dadurch gekennzeichnet, dass** der (m+n)-wertige Polyurethan-Prepolymer-Rest Polyether-Polyol-Einheiten enthält.

6. Die Polyurethanmasse nach einem der Ansprüche 1 bis 4, **dadurch gekennzeichnet, dass** der (m+n)-wertige Polyurethan-Prepolymer-Rest aus Polyester-Polyol-Einheiten oder aus einer Mischung aus Polyether-Polyol-Einheiten und Polyester-Polyol-Einheiten aufgebaut ist.

7. Die Polyurethanmasse nach einem der Ansprüche 1 bis 6, **dadurch gekennzeichnet, dass** das Prepolymer ein mittleres Molekulargewicht im Bereich von 500 bis 20'000 g/Mol aufweist.

8. Die Polyurethanmasse nach einem der Ansprüche 1 bis 7, **dadurch gekennzeichnet, dass** sie zusätzlich ein weiteres Polyisocyanat mit zwei oder mehr Isocyanat-Endgruppen enthält.

9. Die Polyurethanmasse nach Anspruch 8, **dadurch gekennzeichnet, dass** das weitere Polyisocyanat ausgewählt ist aus der Gruppe umfassend beispielsweise ein Diisocyanat-Monomer, ein Diisocyanat-Oligomer oder ein Polyurethan-Prepolymer mit Isocyanat-Endgruppen, wobei das Verhältnis aller Isocyanatgruppen zu den latenten Aminogruppen 1:1 bis 1:0.2 beträgt.

10. Verwendung einer Polyurethanmasse nach einem der Ansprüche 1 bis 8, als Dichtmasse für Fugen, als Klebstoff für elastische Verklebungen oder als Beschichtung für flächige Abdichtungen.

## Claims

1. A moisture-curing one-component polyurethane material comprising a prepolymer, represented by the following formula
(NCO)ₘ A(B)ₙ (I),
in which A is an (m+n)-valent radical as formed by removing (m+n) isocyanate groups from an (m+n)-functional polyurethane prepolymer, **characterized in that**
m is 1 or 2,
n is 1 or 2 and
B is a latent amino group which is bonded to A via a urea bond,
B being defined by one of the two following formulae 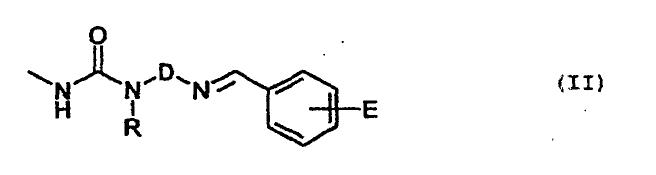 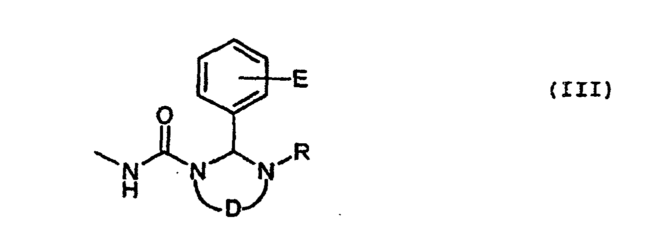 in which R is an aliphatic hydrocarbon radical having 1 to 8 C atoms, a cycloaliphatic hydrocarbon radical having 5 to 15 C atoms or a phenyl or alkylphenyl radical having 7 to 15 C atoms,
D is a divalent aliphatic hydrocarbon radical having 1 to 8 C atoms, a divalent cycloaliphatic hydrocarbon radical having 5 to 15 C atoms or a divalent alkylphenyl radical having 7 to 15 C atoms, or,
in the case of formula (II), R and D together with the nitrogen atom form a five- or six-membered ring, substituted by a hydrocarbon chain having 1 to 5 C atoms, which carries the aldimine group, and
E is a phenyl, an alkylphenyl, an optionally substituted phenoxy or an optionally substituted alkoxyphenyl radical.

2. The polyurethane material as claimed in claim 1, **characterized in that** the radical E is a phenoxy group in the 3-position.

3. The polyurethane material as claimed in claim 1 or 2, **characterized in that** the (m+n)-valent polyurethane prepolymer radical is composed of aromatic isocyanate units.

4. The polyurethane material as claimed in claim 1 or 2, **characterized in that** the (m+n)-valent polyurethane prepolymer radical is composed of aliphatic isocyanate units.

5. The polyurethane material as claimed in any of claims 1 to 4, **characterized in that** the (m+n)-valent polyurethane prepolymer radical contains polyetherpolyol units.

6. The polyurethane material as claimed in any of claims 1 to 4, **characterized in that** the (m+n)-valent polyurethane prepolymer radical is composed of polyesterpolyol units or of a mixture of polyetherpolyol units and polyesterpolyol units.

7. The polyurethane material as claimed in any of claims 1 to 6, **characterized in that** the prepolymer has an average molecular weight in the range from 500 to 20 000 g/mol.

8. The polyurethane material as claimed in any of claims 1 to 7, **characterized in that** it additionally contains a further polyisocyanate having two or more terminal isocyanate groups.

9. The polyurethane material as claimed in claim 8, **characterized in that** the further polyisocyanate is selected from the group consisting of, for example, a diisocyanate monomer, a diisocyanate oligomer: or a polyurethane prepolymer having terminal isocyanate groups, the ratio of all isocyanate groups to the latent amino groups being 1:1 to 1:0.2.

10. The use of a polyurethane material as claimed in any of claims 1 to 8 as a sealing compound for joints, as an adhesive for elastic adhesive bonds or as a coating for extensive seals.

## Revendications

1. Masse de polyuréthanne à un composant, durcissant sous l'effet de l'humidité, contenant un prépolymère, représenté par la formule suivante :
(NCO)ₘ A (B)ₙ (I),
dans laquelle A représente un radical de valence (m+n), tel que formé par l'élimination de (m+n) groupes isocyanate d'un prépolymère de polyuréthanne de valence (m+n), **caractérisée en ce que**
m vaut 1 ou 2,
n vaut 1 ou 2 et
B représente un groupe amino latent, qui est lié à A via une liaison urée
B étant défini par l'une des deux formules suivantes 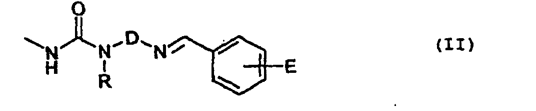 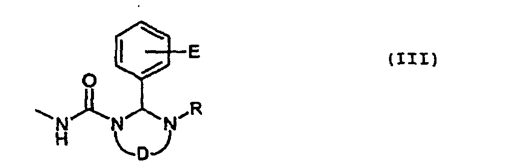 R représentant un radical hydrocarboné aliphatique comprenant 1 à 8 atomes de carbone, un radical hydrocarboné cycloaliphatique comprenant 5 à 15 atomes de carbone ou un radical phényle ou alkylphényle comprenant 7 à 15 atomes de carbone,
D représente un radical hydrocarboné aliphatique divalent comprenant 1 à 8 atomes de carbone, un radical hydrocarboné cycloaliphatique divalent comprenant 5 à 15 atomes de carbone ou un radical alkylphényle divalent comprenant 7 à 15 atomes de carbone ou,
dans le cas de la Formule (II), R et D forment ensemble avec l'atome d'azote un cycle à cinq ou six membres, substitué par une chaîne hydrocarbonée comprenant 1 à 5 atomes de carbone, qui porte le groupe aldimine, et
E représente un radical phényle, un radical alkylphényle, un radical phényloxy éventuellement substitué ou un radical alkyloxyphényle éventuellement substitué.

2. Masse de polyuréthanne selon la revendication 1, **caractérisée en ce que** le radical E représente un groupe phénoxy en 3ème position.

3. Masse de polyuréthanne selon la revendication 1 ou 2, **caractérisée en ce que** le radical du prépolymère de polyuréthanne de valence (m+n) est élaboré à partir d'unités isocyanate aromatiques.

4. Masse de polyuréthanne selon la revendication 1 ou 2, **caractérisée en ce que** le radical du prépolymère de polyuréthanne de valence (m+n) est élaboré à partir d'unités isocyanate aliphatiques.

5. Masse de polyuréthanne selon l'une quelconque des revendications 1 à 4, **caractérisée en ce que** le radical du prépolymère de polyuréthanne de valence (m+n) contient des unités polyéther-polyol.

6. Masse de polyuréthanne selon l'une quelconque des revendications 1 à 4, **caractérisée en ce que** le radical du prépolymère de polyuréthanne de valence (m+n) est élaboré à partir d'unités polyester-polyol ou d'un mélange d'unités polyéther-polyol et d'unités polyester-polyol.

7. Masse de polyuréthanne selon l'une quelconque des revendications 1 à 6, **caractérisée en ce que** le prépolymère présente un poids moléculaire moyen dans la plage de 500 à 20000 g/mole.

8. Masse de polyuréthanne selon l'une quelconque des revendications 1 à 7, **caractérisée en ce qu'**elle contient en outre un autre polyisocyanate comprenant deux groupes terminaux isocyanate ou plus.

9. Masse de polyuréthanne selon la revendication 8, **caractérisée en ce que** l'autre polyisocyanate est choisi dans le groupe comprenant par exemple un monomère diisocyanate, un oligomère diisocyanate ou un prépolymère de polyuréthanne présentant des groupes terminaux isocyanate, le rapport de tous les groupes isocyanate aux groupes amino latents étant de 1:1 à 1:0,2.

10. Utilisation d'une masse de polyuréthanne selon l'une quelconque des revendications 1 à 8, comme masse d'étanchéité pour joints, comme adhésif pour des collages élastiques ou comme revêtement pour des joints plats.
